# EUROPÄISCHE PATENTSCHRIFT

(11) **EP 2 272 025 B1**
(45) Veröffentlichungstag und Bekanntmachung des Hinweises auf die Patenterteilung: **24.07.2019**
(21) Anmeldenummer: 09728146.3
(22) Anmeldetag: 31.03.2009
(51) Int. Cl.: G06F 21/34, G06Q 20/02, G06Q 20/34, G06Q 20/38, G07F 7/10, H04L 9/08, G06Q 20/40

(54) **SYSTEM UND VERFAHREN ZUM BEREITSTELLEN VON BENUTZERMEDIEN**
SYSTEM AND METHOD FOR PROVIDING USER MEDIA
SYSTÈME ET PROCÉDÉ DE PRODUCTION DE SUPPORTS UTILISATEUR

(30) Priorität: 01.04.2008 CH 489082008
(43) Veröffentlichungstag der Anmeldung: 12.01.2011
(73) Patentinhaber: dormakaba Schweiz AG, 8620 Wetzikon (CH)
(72) Erfinder: KUSTER, Christian, 8342 Wernetshausen / ZH (CH); SEGMÜLLER, Mike, CH-8500 Frauenfeld (CH)
(74) Vertreter: Balder IP Law, S.L.
(86) Internationale Anmeldenummer: PCT/CH2009/000108
(87) Internationale Veröffentlichungsnummer: WO 2009/121197

(56) Entgegenhaltungen:
- EP-A- 1 023 703
- FR-A- 2 875 656
- US-A- 4 811 393
- US-A- 4 910 773
- RANKL W: "Handbuch der Chipkarten, PASSAGE" HANDBUCH DER CHIPKARTEN, XX, XX, 1. Januar 2002 (2002-01-01), Seiten 203-210, XP002389992

## Beschreibung

Die Erfindung betrifft das Gebiet Identifizierungstechnologie, wie sie beispielsweise für Sicherheits- und Datenträgersysteme zur Anwendung kommt. Sie betrifft insbesondere ein System und ein Verfahren zum Herstellen von Benutzermedien in einem Identifizierungssystem.

Identifizierungssysteme (oft auch als Identifikationssysteme bezeichnet, oft wäre der Begriff "Authentifizierungssystem" korrekter) kommen zum Einsatz bei unterschiedlichen Anwendungen wie der Zugangskontrolle (in sogenannten, online-Systemen, bei denen ein Objekt, zu dem der Zugang kontrolliert wird, in Kontakt mit einer zentralen Einheit steht, und in ,offline'-Systenen bei denen das nicht der Fall ist), Wertkartensystemen, Datenerfassungssystemen etc.

Meist weisen die Identifizierungssysteme Benutzermedien - beispielsweise "Smart Cards" - auf, die mit einem Datenspeicher versehen sind, auf dem ein geeigneter elektronischer Schlüssel abgespeichert ist. In der Anwendung findet - meist berührungslos - ein Datenaustausch mit einer Schreib- und/oder Leseeinrichtung statt, wobei anhand der elektronischen Schlüssel ein Authentifizierungsprozess ausgeführt wird und die gewünschte Aktion - bspw. die Freigabe eines Objektes, der Bezug einer Ware oder Dienstleistung, das Schreiben einer Information auf das Benutzermedium, etc. - nur erfolgreich durchgeführt wird, wenn in der Schreib- und/oder Leseeinrichtung oder eventuell im Benutzermedium die Korrektheit des elektronischen Schlüssels festgestellt wird oder das Resultat einer Rechenoperation auf Basis des Schlüssels einen gewünschten Wert ergibt.

Ein oft gewähltes Vorgehen ist, dass der gemeinsame elektronische Schlüssel auf allen Benutzermedien abgespeichert und allen Schreib- und/oder Leseeinrichtungen eines Systems der elektronische Schlüssel bekannt ist. Das ist eine gute Lösung für kleine, übersichtliche Systeme. Es ist aber nicht sinnvoll bei grösseren Systemen. Wenn nämlich ein Medium oder der Schlüssel verloren geht und (möglicherweise) an eine nicht autorisierte Person gelangt, müssen alle Elemente des Systems mit einem neuen Schlüssel neu programmiert werden.

Ein alternatives Vorgehen, ist einen sogenannten "Site Key" oder "Master Key" vorzusehen, der als Basis für die Berechnung der elektronischen Schlüssel dient. Die elektronischen Schlüssel der verschiedenen Medien sind verschieden, nur der 'Master Key' ist gemeinsam. Der 'Master Key' wird nie für die Identifizierung verwendet, und er ist nicht aus den Schlüsseln berechenbar.

Dieses alternative Vorgehen ermöglicht, dass beim Verlust eines Mediums nicht alle Elemente des Systems neu programmiert werden müssen, sondern nur bestimmte Applikationen, die vom Verlust betroffen sind. Es gibt jedoch immer noch gewichtige Nachteile. So werden Benutzermedien im Allgemeinen durch einen Computer initialisiert und beschrieben, in welchem der Master Key vorhanden sein muss. Das stellt ein Sicherheitsrisiko dar, denn wenn der Master Key kopiert wird, ist das eine Gefährdung des ganzen Systems. Aus diesem Grund werden Medien in solchen Systemen von zentralen Zertifizierungsstellen - bspw. durch den Verkäufer des ganzen Identifizierungssystems zur Verfügung gestellt - herausgegeben; diesen zentralen Zertifizierungsstellen geben den Master Key nie heraus. Bei genügenden Sicherheitseinrichtungen seitens der zentralen Zertifizierungsstellen kann zwar die benötigte Sicherheit einigermassen gewährleistet werden, aber die Beschaffung von neuen Medien ist kompliziert und - durch Einbezug der zentralen Zertifizierungsstelle - auch teuer. Ausserdem besteht immer das Restrisiko eines Missbrauchs durch bei der Zertifizierungsstelle arbeitende Personen.

Ein System mit zentraler Zertifizierungsstelle für Anwendungen im Bankensektor oder dergleichen wird beispielsweise in den US-Patenten 4,811,393 und 4,910,773 beschrieben. Gemäss dieser Lehre werden 'User Cards' (Benutzermedien) zur Verfügung gestellt, die auch als Sicherheitsmodule ausgebildet sind, auf deren Speicher beispielsweise nur der moduleigene Prozessor Zugriff hat. Auf die Benutzermedien wird ein abgeleiteter Schlüssel (diversified key) abgelegt, der aus einem Basisschlüssel bestimmt worden ist. Auch dieses System bedingt noch eine zentrale Zertifizierungsstelle und ist ausserdem auch darum kostenaufwändig, weil alle Benutzermedien hardwaremässig als Sicherheitsmodule mit entsprechenden Prozessoren und Datenspeichern ausgelegt sein müssen.

Es ist eine Aufgabe der Erfindung, Ansätze zur Verfügung zu stellen, welche hier Abhilfe schaffen.

Vorliegend wird ein Identifizierungssystem zur Verfügung gestellt, das mindestens ein Schlüsselspendermedium mit einem ersten integrierten Schaltkreis und mindestens ein Benutzermedium beinhaltet. Der erste integrierte Schaltkreis weist Speichermittel und Prozessormittel auf, die vorzugsweise monolithisch integriert sind. Er ist dazu ausgerüstet, einen Quellenschlüssel ("Site Key") abzuspeichern und daraus abgeleitete Schlüssel zu berechnen. Dabei erlaubt vorzugsweise die Hardware des Schlüsselspendermediums kein Auslesen des unverschlüsselten Quellenschlüssels. Das Benutzermedium kann einen zweiten integrierten Schaltkreis aufweisen und ist dafür ausgerüstet, einen abgeleiteten Schlüssel abzuspeichern und zusammen mit einer Schreib- und/oder Leseeinrichtung einen Authentifizierungsprozess auf Basis dieses abgeleiteten Schlüssels durchzuführen.

Das Schlüsselspendermedium ist befähigt, in einem Initialisierungsprozess den Quellenschlüssel selbst zu generieren, und das Schlüsselspendermedium den Quellenschlüssel nur durch einen nicht auslesbaren Sicherheitsschlüssel entschlüsselbar weitergeben kann, wobei der Sicherheitsschlüssel in jedem Schlüsselspendermedium vorhanden ist.

Die monolithische Integration des ersten integrierten Schaltkreises, der nebst dem Speicher für den Quellenschlüssel auch die Prozessormittel zum Berechnen des abgeleiteten Schlüssels beinhaltet, ist vorteilhaft, indem für die Berechnung des abgeleiteten Schlüssels keine die Berechnung des Quellenschlüssels ermöglichenden Daten den integrierten Schaltkreis verlassen müssen.

Gemäss einer ersten Eigenschaft von bevorzugten Ausführungsformen der Erfindung weist die Schreib- und/oder Leseeinrichtung einen dritten integrierten Schaltkreis auf, der wie das Schlüsselspendermedium dazu ausgerüstet ist, einen Quellenschlüssel ("Site Key") abzuspeichern und daraus abgeleitete Schlüssel zu berechnen.

Dabei erlaubt vorzugsweise die Hardware der Schreib- und/oder Leseeinrichtung kein Auslesen des unverschlüsselten Quellenschlüssels und erlaubt beispielsweise auch nicht die Herausgabe von verschlüsselten den Quellenschlüssel aufweisenden Daten, und/oder erlaubt beispielsweise auch keine Herausgabe von abgeleiteten Schlüsseln. Letztere werden ausschliesslich berechnet, um den Authentifizierungsprozess zusammen mit den Benutzermedien, die ja ebenfalls diesen abgeleiteten Schlüssel aufweisen, durchzuführen. Es kann jedoch auch vorgesehen sein, dass der dritte integrierte Schaltkreis den abgeleiteten Schlüssel an ein anderes Element der Schreib- und/oder Leseeinrichtung weitergibt, welche dann ihrerseits den Authentifizierungsprozess mit dem Benutzermedium durchführt.

Besonders bevorzugt ist der dritte integrierte Schaltkreis physisch identisch zum ersten integrierten Schaltkreis ausgeführt und unterscheidet sich von diesem nur dadurch, dass er unterschiedlich konfiguriert ist.

Gemäss einer zweiten Eigenschaft von bevorzugten Ausführungsformen der Erfindung sind nun das Schlüsselspendermedium und das Benutzermedium physisch verschieden ausgestaltet, derart, dass es dem Benutzermedium weder direkt noch mit Hilfsmitten (bspw. einem dazwischengeschalteten Computer) möglich ist, den Quellenschlüssel auszulesen oder auf andere Art zu ermitteln und/oder dass es dem Benutzermedium nicht möglich ist, einen abgeleiteten Schlüssel zu berechnen.

Beispielsweise können der erste integrierte Schaltkreis und der zweite integrierte hardwaremässig so unterschiedlich ausgestaltet sein, dass dem ersten integrierten Schaltkreis Operationen (Berechnungen etc.) möglich sind, die der zweite integrierte Schaltkreis gar nicht ausführen kann.

Dieses Vorgehen hat den wichtigen Vorteil, dass Besitzer von Benutzermedien auch nicht durch unerlaubte Aktionen dieses zu einem Schlüsselspender machen können. Die Schlüsselspender können in kleiner Stückzahl behalten und jederzeit kontrolliert werden.

Bei einigen Ausführungsformen der Erfindung weist das Identifizierungssystem mindestens zwei unterschiedliche Kommunikationskanäle auf, die sich durch die Physik der Signalübertragung und/oder durch die verwendeten Protokolle grundlegend unterscheiden. So kann beispielsweise vorgesehen sein, dass die Schlüsselspendermedien ausschliesslich kontaktbehaftet ausgelesen werden können, während die Kommunikation zwischen Benutzermedien und Schreib- und/oder Leseeinrichtung berührungslos, bspw. über Radiofrequenzwellen (RFID) oder andere elektromagnetische Wellen, induktiv oder kapazitiv/resistiv erfolgt. Auch die Verwendung von elektromagnetischen Wellen für den Datenaustausch sowohl mit den Schlüsselspendermedien als auch mit den Benutzermedien, jedoch mit unterschiedlichen Frequenzen und/oder verschiedenen Protokollen ist denkbar.

Bevorzugt sind Identifizierungssysteme gemäss diesen Ausführungsformen so ausgestaltet, dass Benutzermedien eine von den Schlüsselspendern verschiedene Datenaustauschschnittstellen haben, d.h. die Benutzermedien können aufgrund der verschiedenen Kommunikationskanäle keine Daten lesen, die von Schlüsselspendermedien auf mindestens einem zur Verfügung stehenden Kommunikationskanal ausgesandt werden.

Das Vorgehen gemäss diesen Ausführungsformen verstärkt Vorteile, die aufgrund der zweiten vorteilhaften Eigenschaft erzielt werden.

Gemäss einer dritten Eigenschaft von bevorzugten Ausführungsformen der Erfindung ist das Schlüsselspendermedium befähigt, ein von einem anderen Schlüsselspendermedium zur Verfügung gestellten verschlüsselten Quellenschlüssel zu entschlüsseln und abzuspeichern, und den Quellenschlüssel zur Weitergabe an ein anderes Schlüsselspendermedium zu verschlüsseln. Dadurch ist es den Schlüsselspendermedium möglich, ein Duplizieren eines Schlüsselspenders (als 'Schlüsselspender' wird hier ein Schlüsselspendermedium mit darauf abgespeichertem Quellenschlüssel bezeichnet). auf ein ,Rohling'-Schlüsselspendermedium durchzuführen.

Die Herausgabe des Quellenschlüssels erfolgt beim Vorgehen gemäss der dritten Eigenschaft nur verschlüsselt und beispielsweise nur nach Eingabe eines weiteren Sicherheitselements, bspw. einer PIN. Alternativ oder ergänzend kann als weiteres Sicherheitselement die Weitergabe eines (bspw. verschlüsselten) spezifischen Codes (Unikatsnummer oder dergleichen) des zu beschreibenden Schlüsselspendermediums erforderlich sein. Dieser spezifische Code wird bspw. am Anfang des Prozesses vom zu beschreibenden Schlüsselspendermedium angefordert. Dieses zusätzliche Sicherheitsmerkmal hat den Vorteil, ein missbräuchlich abgespeichertes Datenpaket mit dem verschlüsselten Quellenschlüssel nicht auch zur Generierung weiterer Schlüsselspender verwendet werden kann. Das Sicherheitsmerkmal kann für alle ersten Prozessormittel und ggf. eventuell auch für die dritten Prozessormittel, bspw. sofern sie online beschreibbar sind, oder auch nur für eine Auswahl von Prozessormitteln erforderlich sein.

Zum Zweck der Verschlüsselung können die Schlüsselspendermedien fabrikationsseitig mit einem Sicherheitsschlüssel versehen sein, der dem Betreiber des Identifikationssystem nicht bekannt ist (es kann pro Betreiber einen eigenen Sicherheitsschlüssel vorgesehen sein, oder der Sicherheitsschlüssel kann für mehrere oder gar für jeden Betreiber identisch sein, ohne dass sich daraus Sicherheitsprobleme ergeben). Der Sicherheitsschlüssel dient dem Entschlüsseln - und im Fall der symmetrischen Verschlüsselung auch dem Verschlüsseln - des Quellenschlüssels und ist so in der ersten integrierten Schaltung integriert, dass er nie herausgegeben werden kann. Als Alternative kann auch eine asymmetrische Verschlüsselung vorgesehen sein, wobei mindestens der zur Entschlüsselung benötigte Schlüssel ein Sicherheitsschlüssel ist, der nur dem Sicherheitschip bekannt ist.

Es kann - ein solches Vorgehen ist an sich bekannt - beispielsweise vorgesehen sein, dass der Sicherheitsschlüssel keiner einzigen Einzelperson bekannt ist, sondern sich aus einer Verknüpfung von verschiedenen, Teilschlüsseln ergibt, die unterschiedlichen Personen/Personengruppen bekannt sind.

Erfindungsgemäss kann der Quellenschlüssel durch das Schlüsselspendermedium selbst generiert werden.

In der Summe ergibt sich die Möglichkeit für einen Betreiber des Identifikationssystems, die Benutzermedien selbst zu initialisieren und mit (abgeleiteten) Schlüsseln zu versehen, ohne diese von einer zentralen Einheit mit entsprechenden Sicherheitseinrichtungen herstellen zu lassen. Trotzdem ist die Sicherheit im Vergleich mit bestehenden Systemen nicht beeinträchtigt, was in der nachfolgenden Beschreibung noch eingehender erläutert wird. Der Benutzer kann auch mehrere Schlüsselspendermedien generieren und verwalten, was für den Fall eines Ausfall oder Verlust eines der Medien vorteilhaft ist.

Gemäss einer bevorzugten Ausgestaltung von Ausführungsformen mit der dritten Eigenschaft können zwei verschiedene Typen von Schlüsselspendermedien vorhanden sein. Ein erster Typ Schlüsselspendermedien ist befähigt, durch Duplizieren weitere Schlüsselspender zu erzeugen. Ein zweiter Typ Schlüsselspendermedien - in diesem Text auch "reduziertes Schlüsselspendermedium" genannt - kann zwar abgeleitete Schlüssel aus dem Quellenschlüssel ableiten - und ggf. wie nachstehend beschrieben Schreib- und/oder Leseeinrichtungen initialisieren - jedoch keine anderen Schlüsselspender erzeugen.

Gemäss einer ersten Variante wird das bewerkstelligt, indem von ersten/zweiten Typ Schlüsselspendermedium erzeugte Daten mit unterschiedlichen Kennzeichnungen versehen werden. Die integrierten Schaltungen beider Typen Schlüsselspendermedien verweigern das Abspeichern eines Quellenschlüssels, wenn die den Quellenschlüssel (verschlüsselt) enthaltenen Daten von einem reduzierten Schlüsselspendermedium stammen. Das kann durch eine entsprechende Konfiguration der ersten integrierten Schaltung bewirkt werden.

Gemäss einer zweiten Variante ist der zweite Typ Schlüsselspendermedien gar nicht befähigt, den Quellenschlüssel (verschlüsselt) herauszugeben.

Die Unterscheidung zwischen ersten und zweiten Schlüsselspendern erlaubt eine feinere Abstufung von Berechtigungen durch den Betreiber.

Die Verwendung von reduzierten Schlüsselspendern gemäss der ersten Variante ist ausserdem insbesondere dann sinnvoll, wenn wie nachstehend beschrieben der verschlüsselte Quellenschlüssel über eine Datenleitung oder ein Netzwerk verschickt wird. Dann kann eine Person, die die Datenleitung unberechtigterweise abhört aus dem verschlüsselten Quellenschlüssel auch bei Vorhandensein eines Schlüsselspendermedium-Rohlings keinen Schlüsselspender generieren.

Bei Ausführungsformen der Erfindung mit einer vierten vorteilhaften Eigenschaft kann ein Identifizierungssystem so eingerichtet werden, dass der Betreiber des Systems die Schlüssel für den täglichen Gebrauch auf Benutzermedien selbst einrichten kann. Es sind also zwei voneinander unabhängige Instanzen vorhanden, die zur Erzeugung der im Gebrauch stehenden Schlüssel beitragen:
- der Hersteller des Identifizierungssystems, der die Medien (Schlüsselspendermedien/Benutzermedien/Schreib- und/oder Leseeinrichtungen) zur Verfügung stellt, mit darin vorhandenen Sicherheitsmerkmalen, und
- der Betreiber selbst, der völlig unabhängig vom Hersteller die verwendeten Schlüssel generieren kann.

Im Vergleich zum Stand der Technik ist das sicherer, denn auch eine Gruppe von beim Hersteller arbeitenden Personen kann nie an alle Sicherheitsmerkmale gelangen, da die Schlüssel selbst vom Betreiber erzeugt werden. Ausserdem ist das Vorgehen auch weniger aufwändig und unter Umständen für den Betreiber kostengünstiger, denn er kann das ganze System selbst aufsetzen und im Falle von notwendigen Anpassungen auch wieder neu konfigurieren.

Bei Ausführungsformen mit der vierten Eigenschaft wird dem Betreiber bspw. ein Set von Teilen ausgehändigt, das mindestens ein Schlüsselspendermedium - das bevorzugt die Fähigkeit aufweist, selbst den Quellenschlüssel zu generieren und als Schlüsselspendermedium-Rohling übergeben wird - und eine Mehrzahl von Benutzermedien, ebenfalls ohne Schlüssel (oder mit einem fabrikseitig eingerichteten, provisorischen Schlüssel) umfasst. Zum Set gehört vorzugsweise auch eine Anleitung in der ausgeführt wird, wie der Betreiber selber Quellenschlüssel generieren, aus diesen abgeleitete Schlüssel ableiten, und ggf. Schlüsselspender duplizieren kann.

Während jede der obigen vorteilhaften Eigenschaften an einem Identifizierungssystem gemäss der Erfindung für sich allein realisiert werden kann, sind besonders bevorzugt Kombinationen der obigen vorteilhaften Eigenschaften, die in synergistischer Weise miteinander zur erhöhten Sicherheit, zur Kompatibilität mit bestehenden Identifizierungstechnologien und zur guten Handhabbarkeit durch den Betreiber beitragen, was aus nachfolgenden Erläuterungen und der Beschreibung der Ausführungsbeispiele noch konkreter hervorgeht. Beliebige Kombinationen von zwei, drei oder allen vier der vorteilhaften Eigenschaften gehören zur erfindungsgemässen Lehre; ganz besonders bevorzugt ist ein Kombination aller vier Eigenschaften.

Nachfolgende Ausführungen sind - wo nicht anders vermerkt - auf alle Eigenschaften und Kombinationen von Eigenschaften anwendbar.

Die Schlüsselspender enthalten den Quellenschlüssel und sind eingerichtet, aus dem Quellenschlüssel und weiteren Parametern (bspw. einer Unikatsnummer und/oder eines Applikationsindexes) einen abgeleiteten Schlüssel zu berechnen und diesen herauszugeben. Die Schlüsselspender werden als 'Master' nur einem eingeschränkten Benutzerkreis zur Verfügung gestellt, bspw. nur einem Systemverantwortlichen. Ausserdem können die Schlüsselspender - bzw. die darauf vorhandenen ersten integrierten Schaltkreise - so eingerichtet sein, dass sie die Herausgabe des verschlüsselten Quellenschlüssels und/oder die Herausgabe eines abgeleiteten Schlüssels von der Eingabe eines Identifikationscodes (bspw. PIN) abhängig machen. Bei mehrfacher Eingabe eines nicht passendes Codes kann ein automatisches "Reset" vorgesehen sein, bspw. inklusive ein Löschen oder nicht unzugänglich machen des Quellenschlüssels. Die ersten integrierten Schaltkreise sind monolithisch in dem Sinn, dass Speichermittel und Prozessormittel in einem gemeinsamen Baustein (Chip) integriert sind, und es gibt keine ohne Zerstörung des Chips zugänglichen Datenleitungen zwischen Speicher und Prozessor.

Der erste - und gegebenenfalls auch der dritte integrierte Schaltkreis - können beispielsweise als Sicherheitschip ausgestaltet sein, der sowohl die Speichermittel als auch die Prozessormittel aufweist. Sicherheitschips, die (gewisse) Daten nur verschlüsselt ausgeben und die auch 'reverse engineering' zumindest erschweren, sind im Prinzip bereits bekannt. Der erste und ggf. der dritte integrierte Schaltkreis weisen bspw. zusätzlich Mittel auf, auf Basis des Quellenschlüssels und unter Zuhilfenahme weiterer Daten (bspw. einer Unikatsnummmer und/oder eines Applikationsindexes) einen abgeleiteten Schlüssel zu berechnen. Der erste integrierte Schaltkreis kann diesen abgeleiteten Schlüssel ausserdem - ggf. verschlüsselt - herausgeben.

Die Schlüsselspendermedien können physisch als Chipkarten, Dongles, in ein Datenverarbeitungsgerät integrierte oder integrierbare (Steckplatz etc.) Chipsets etc. ausgebildet sein. Für die Erfindung ist die physische Ausgestaltung nicht wesentlich, wobei die monolithische Integration des den Quellenschlüssel enthaltenden Speichers mit den diesen verschlüsselnden und die abgeleiteten Schlüssel berechnenden Prozessormitteln in einem einzigen Chip in jedem Fall bevorzugt wird.

Die zweiten Medien sind Benutzermedien. Sie enthalten einen von einem Schlüsselspender berechneten abgeleiteten Schlüssel. Sie sind ausserdem dazu ausgerüstet, auf einem - vorzugsweise kontaktlosen - Weg mit einer Schreib- und/oder Leseeinrichtung Daten auszutauschen und einen Authentifizierungsprozess durchzuführen. Der Datenaustausch zwischen Benutzermedien und Schreib- und/oder Leseeinrichtung kann bspw. über Radiofrequenz-(RF-)Signale erfolgen. Dabei kann eine an sich bekannte Technologie verwendet werden, zum Zeitpunkt des Erstellens vorliegenden Texts bspw. Mifare® (ein auf ISO 14443A basierendes System, das in verschiedenen Varianten angeboten wird, inklusive "Mifare Classic" und "Mifare DESfire"), oder auch FeliCa (ISO 18092), ein anderes ISO 14443A basierendes System, ein ISO14443 B basierendes System etc. Im Prinzip kann jede Technologie verwendet werden, die die Authentifizierung von Benutzermedien und einer Schreib- und/oder Leseeinrichtung über berührungslose oder auch kontaktbehaftete Datenübertragung ermöglicht. Wie nachstehend noch weiter ausgeführt wird, ist ein Vorteil des erfindungsgemässen Identifizierungssystem, dass ein guter Sicherheitsstandard zur Verfügung gestellt wird, der unabhängig von den eingebauten Sicherheiten der Datenübermittlungstechnologie ist. Die bei der Authentifizierung ablaufenden Verfahrensschritte sind meist durch die verwendete Technologie (bspw. "Mifare Classic") definiert. Sie können auf dem Challenge-Response-Verfahren oder anderen Ansätzen beruhen und sind zum Teil proprietär und nicht bekannt; die Erfindung funktioniert unabhängig davon, ob die Authentifizierung mit bekannten oder geheimen Algorithmen durchgeführt wird. Durch das erfindungsgemässe Vorgehen wird lediglich der - abgeleitete - Schlüssel zur Verfügung gestellt; wie dieser bei der Authentifizierung verwendet wird ist für die Erfindung nicht von Bedeutung.

Die physische Ausgestaltung der Benutzermedien kann jede vom Stand der Technik her bekannte Form sein, bspw. als Chipkarte (mit RFID-Chip - in dieser Form auch als RFID-,Tag' bezeichnet - oder anderem Chip), als in ein anderes Medium (Uhr, Mobiltelefon etc.) integrierter RFID-Tag, als in einen Schlüssel eingebauter Chip, etc. Auch neue, alternative Formen sind denkbar.

Die Schreib- und/oder Leseeinrichtungen sind bei der Authentifizierung das Gegenstück zu den Benutzermedien. Der dritte integrierte Schaltkreis kann gegebenenfalls beispielsweise zunächst aus von dem Benutzermedium zur Verfügung gestellten Parametern (bspw. der Unikatsnummer und/oder des Applikationsindexes) den ggf. spezifischen Applikationsschlüssel des Benutzermediums berechnen. Zu diesem Zweck ist der dritte integrierte Schaltkreis dann bspw. wie der erste integrierte Schaltkreis eingerichtet, aus dem Quellenschlüssel und diesen Parametern mit demselben Algorithmus - bspw. einem Hash-Algorithmus - wie der erste integrierte Schaltkreis eine Berechnung durchzuführen. Auch der dritte integrierte Schaltkreis ist vorzugsweise monolithisch in dem Sinn, dass Speichermittel und Prozessormittel in einem gemeinsamen Baustein (Chip) integriert sind, und es gibt keine ohne Zerstörung des Chips zugänglichen Datenleitungen zwischen Speicher und Prozessor. Der dritte integrierte Schaltkreis kann physisch wie der erste integrierte Schaltkreis aufgebaut sein, wobei vorzugsweise jedoch die Konfiguration so gewählt ist, dass die Herausgabe des Quellenschlüssels auch verschlüsselt nicht möglich ist, oder dass ein von einem dritten integrierten Schaltkreis herausgegebener Schlüssel von keinem ersten oder dritten integrierten Schaltkreis angenommen wird.

Die Schreib- und/oder Leseeinrichtungen können äusserlich wie bekannte Schreib- und/oder Leseinrichtungen (bspw. von Mifare-Anwendungen) ausgebildet sein, wobei im Unterschied zu den bekannten Schreib- und/oder Leseeinrichtungen der genannte dritte integrierte Schaltkreis vorhanden ist, der den für die Authentifizierung benötigten Schlüssel berechnet.

Das Vorgehen gemäss den verschiedenen Ausführungsformen der Erfindung hat folgende Vorteile: Das 'Geheimnis' des Identifizierungssystems ist der Quellenschlüssel. Die Hardware aller Elemente des Systems ist so eingerichtet, dass der Quellenschlüssel von keiner Komponente des Systems unverschlüsselt herausgegeben wird. Der Quellenschlüssel kann nur von einem ersten oder ggf. einem dritten integrierten Schaltkreis abgespeichert sein, und nur ein erster oder dritter integrierter Schaltkreis kann den Quellenschlüssel abspeichern (systemfremde Medien können den Schlüssel, auch wenn er ihnen in verschlüsselter Form zur Verfügung steht, gar nicht entschlüsseln). Die ersten und die dritten integrierten Schaltkreise können als eigens für die Applikation hergestellte/konfigurierte Chips, bspw. Sicherheitschips, ausgebildet sein. Das wiederum ermöglicht, die dritten integrierten Schaltkreise so zu konfigurieren, dass diese keinesfalls den Quellenschlüssel oder einen abgeleiteten Schlüssel herausgeben, auch nicht verschlüsselt. Es kann also durch die Ausgestaltung der ersten und ggf. dritten integrierten Schaltkreise sichergestellt werden, dass nur die Schlüsselspendermedien als Schlüsselspender fungieren können, und nur die Schlüsselspendermedien können durch Weitergabe des verschlüsselten Quellenschlüssels weitere Schlüsselspendermedien generieren.

Dadurch sind die Weitergabe des Quellenschlüssels und die Erzeugung von abgeleiteten Schlüsseln perfekt kontrollierbar. Nur wer physisch im Besitz eines Schlüsselspendermediums ist, kann Applikationsschlüssel generieren und eventuell weitere Schlüsselspendermedien kreieren - unabhängig davon, wie die zweiten Medien ausgebildet sind, und mit welchen Mitteln (Computer mit Smart Card Reader, RFID Schreibmodul etc.) diese beschrieben werden.

Das Schlüsselspendermedium wird im alltäglichen Betrieb des Identifizierungssystems jedoch nicht benötigt und können sicher und abgeschlossen aufbewahrt werden, bspw. im Tresor (physikalische Sicherheit).

Sofern der Quellenschlüssel durch den Betreiber generierbar ist, muss er dem Hersteller (Systemprovider) nicht bekannt sein. Der Sicherheitsschlüssel ist höchstens dem Hersteller und beispielsweise niemandem bekannt. Die verwendeten Sicherheitschips sind nur durch den Hersteller herstellbar. In der Summe ergibt sich ein sehr sicheres System, das einen guten Schutz vor Missbräuchen bietet.

Im Folgenden werden Eigenschaften und Ausführungsbeispiele der Erfindung anhand von schematischen Figuren diskutiert. In den Figuren zeigen:
- Fig. 1 ein Schema der Initialisierung von Komponenten einer Ausführungsform eines erfindungsgemässen Identifizierungssystems;
- Fig. 2 ein Schema des Informationsaustauschs in der Ausführungsform gemäss Fig. 1 im täglichen Betrieb;
- Fig. 3a-3e mögliche physische Ausgestaltungen eines Schlüsselspendermediums;
- Fig. 4 eine Ausgestaltung eines Benutzermediums;
- Fig. 5a und 5b Elemente verschiedener Ausführungsformen einer Schreib- und/oder Leseeinheit;
- Fig. 6 eine Ausgestaltung eines Hilfsmediums zum Transferieren des Quellenschlüssels auf eine offline- Schreib- und/oder Leseeinheit; und
- Fig. 7 eine schematische Darstellung von Komponenten eines erfindungsgemässen Identifizierungssystems.

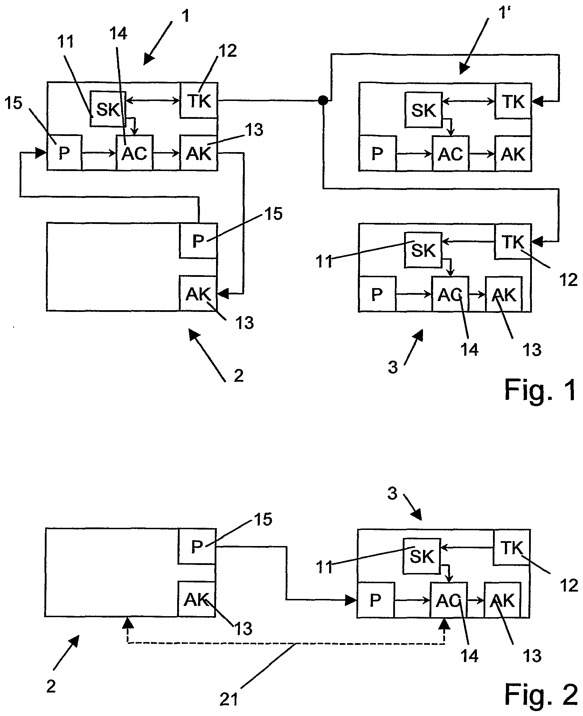

In Figuren 1 und 2 sind schematisch Komponenten eines erfindungsgemässen Identifizierungssystems dargestellt. Diese Komponenten können physisch als Chips bzw. ,Tags' der vorstehend erwähnten Art ausgebildet sein, oder solche Chips aufweisen. Nebst den geschilderten Datenspeicher- und Datenverarbeitungsmitteln sind im Allgemeinen weitere Mittel vorhanden, die den eigentlichen Datenaustausch bewirken, beispielsweise Antennen, Verstärkermittel (die eine Antenne mit einem Signal beaufschlagen) etc, oder auch Kontaktflächen etc. Da die genaue Ausgestaltung dieser weiteren Mittel nicht erfindungsrelevant ist, wird hier nicht weiter darauf eingegangen.

Gemäss **Figur 1** sind auf einem Schlüsselspendermedium 1 ein Quellenschlüssel 11 und ein Sicherheitsschlüssel 12 vorhanden. Der Sicherheitsschlüssel 12 dient für die Verschlüsselung des Quellenschlüssels; er ist kann niemals aus dem Schlüsselspendermedium ausgelesen werden. Der Quellenschlüssel ist in einem beschreibbaren, beispielsweise nichtflüchtigen Speicher des Schlüsselspendermediums abgespeichert. Die interne Verdrahtung des Schlüsselspendermediums erlaubt kein Ablesen des Quellenschlüssels 11 von aussen, und die Verdrahtung und/oder die Firmware des Schlüsselspendermediums erlaubt keine Herausgabe des Quellenschlüssels 11 ohne Verschlüsselung. Das Schlüsselspendermedium weist nebst Mitteln zur Verschlüsselung des Quellenschlüssels 11 mit dem Sicherheitsschlüssel 12 weitere Datenverarbeitungsmittel 14 zum Berechnen eines abgeleiteten Schlüssels 13 aus dem Quellenschlüssel und weiteren Parametern 15 wie der Unikatsnummer und/oder einer Applikationsnummer etc. auf.

Das Benutzermedium 2 weist nebst einem (vorzugsweise beschreibbaren, nichtflüchtigen) Speicher 15 mit Unikatsnummer, Applikationsnummer und/oder anderen, beispielsweise Applikationsabhängigen Daten auch einen Speicherplatz für einen abgeleiteten Schlüssel auf. Das Benutzermedium kann beispielsweise in der Art an sich bekannter Benutzermedien von Identifizierungssystemen ausgebildet und konfiguriert sein und auch die entsprechenden Datenverarbeitungsmittel, beispielsweise zum Verschlüsseln von Daten mit dem abgeleiteten Schlüssel, können implementiert sein.

Das Elektronikmodul der Schreib- und/oder Leseeinrichtung 3 weist ähnlich wie das Schlüsselspendermedium einen Sicherheitsschlüssel 12 und Speicherplätze für den Quellenschlüssel 11 sowie Datenverarbeitungsmittel 14 zum Berechnen eines abgeleiteten Schlüssels 13 auf Basis des Quellenschlüssels 11 und von weiteren Parametern 15 wie der Unikatsnummer und/oder einer Applikationsnummer etc. auf. Vor der Initialisierung des Identifizierungssystems werden dem Benutzer mindestens ein Schlüsselspendermedium 1 (vorzugsweise mehrere Schlüsselspendermedien) und eine Mehrzahl von zweiten Medien 2, und Schreib- und/der Leseeinrichtungen werden mit dritten integrierten Schaltkreisen versehen. Die Schlüsselspendermedien und die dritten integrierten Schaltkreise sind bereits mit dem Sicherheitsschlüssel versehen; der Sicherheitsschlüssel wird dem Benutzer nicht bekanntgegeben. Alle Medien und alle Schreib- und/oder Leseeinrichtungen sind in einem Grundzustand, in welchem sie bspw. keine Quell- bzw. abgeleiteten Schlüssel aufweisen, ausser möglichen fabrikationsseitig vorgegebenen, provisorischen Schlüsseln, die nicht die ganze Sicherheit gewährleisten können.

Bei der Initialisierung des Identifizierungssystems können folgende Verfahrensschritte ablaufen:
Zunächst kann, ausgelöst durch den Benutzer in einem Schlüsselspendermedium ein Quellenschlüssel 11 ermittelt werden, bspw. als Zufallszahl, bspw. mit mindestens 64 Bits, vorzugsweise mindestens 128 Bits, besonders bevorzugt mindestens 256 Bits. Dadurch wird das Medium zu einem Schlüsselspender (Master).

Dann kann optional der Schlüsselspender (das initialisierte Schlüsselspendermedium) durch Beschreiben eines weiteren Schlüsselspendermediums dupliziert werden. Es ist vorteilhaft, wenn der Benutzer über mindestens ein Duplikat des Schlüsselspenders verfügt, damit er im Falle eines Verlusts oder Defekts eines Schlüsselspenders das Identifizierungssystem weiterhin betreiben und warten kann.

Auch beim Duplizierungsvorgang verlässt der Quellenschlüssel das Schlüsselspendermedium nie unverschlüsselt, sondern mit dem Sicherheitsschlüssel 12 verschlüsselt. Das Zielmedium 1', auf das der Schlüsselspender dupliziert wird, weist ebenfalls den Sicherheitsschlüssel 12 auf und kann den Quellenschlüssel 11 entschlüsseln und im vorgesehenen Speicher ablegen.

Mit dem Schlüsselspender 1 kann auch die Schreib- und/oder Leseeinrichtung 3 mit der dritten integrierten Schaltung initialisiert werden. Zu diesem Zweck wird wie in Fig. 1 dargestellt ebenfalls der Quellenschlüssel 11 in den dafür vorgesehenen Speicher eingelesen. In Anwesenheit des Schlüsselspenders kann die Schreib- und/oder Leseeinrichtung durch ein dafür vorgesehenes Programmiergerät auch betreffend Funktionen, Zugriffs- oder Zutrittsrechte etc. programmiert werden.

Die Herausgabe des Quellenschlüssels durch den Master kann an ein weiteres Sicherheitselement geknüpft sein, bspw. die Eingabe einer PIN. Zu diesem Zweck können das Schlüsselspendermedium und auch die Schreib- und/oder Leseeinrichtung Mittel zum Einlesen eines solchen PINs (oder dergleichen) aufweisen, die über ein geeignetes Eingabemittel - bspw. einen Computer, über den das Schlüsselspendermedium mittels Kartenleser, oder Schnittstelle verbunden ist oder ein Programmiergerät, durch welches eine Schreib- und/oder Leseeinrichtung berührungslos kontaktierbar ist - vom Benutzer eingegeben oder auf geeignete Weise eingelesen wurden; das umfasst auch die Möglichkeit der Abfrage biometrischer Daten.

Die Initialisierung eines Benutzermediums 2 erfolgt durch Berechnung des abgeleiteten Schlüssels 13 anhand der bspw. zuvor vom Benutzermedium 2 zur Verfügung gestellten Parameter 15 im Schlüsselspendermedium 1. Anschliessend an die Berechnung wird der abgeleitete Schlüssel 13 im dafür vorgesehenen Speicherplatz des Benutzermediums abgelegt.

Im Gebrauch wird wie in **Figur 2** dargestellt eine Kommunikationsverbindung zwischen dem Benutzermedium und dem Eletronikmodul 3 der Schreib- und/oder Leseeinrichtung hergestellt. Zunächst werden die Benutzermedium-spezifischen Parameter 15 an den dritten integrierten Schaltkreis 3 übermittelt, wodurch dieses befähigt ist, aus dem Quellenschlüssel 11 und diesen Parametern 15 den abgeleiteten Schlüssel 13 zu berechnen. Dieser muss nicht permanent abgespeichert sein (auch wenn das permanente Abspeichern des abgeleiteten Schlüssels eine Option ist), sondern kann für jedem Datenaustausch mit einem Benutzermedium von neuem berechnet werden.

Sobald das Benutzermedium 2 und der dritte integrierte Schaltkreis der Schreib- und/oder Leseeinrichtung 3 im Besitz des (identischen) abgeleiteten Schlüssels 13 sind, kann der Authentifizierungsprozess stattfinden, und es können Schreib- und/oder Lesevorgänge auf den Speichermitteln des Benutzermediums 1 und/oder auf den Speichermitteln der Schreib- und/oder Leseeinrichtung stattfinden. Der beim Authentifizierungsprozess ablaufende Datenaustausch - er kann auf dem Challenge-Response-Prinzip oder auf einem anderen Prinzip beruhen - kann wie an sich vom Stand der Technik her bekannt durchgeführt werden. Es kann beispielsweise ein bekanntes, proprietäres oder normiertes Protokoll verwendet werden. Einer der Stärken der Erfindung ist, dass die Sicherheitsmerkmale und praktischen Vorteile des erfindungsgemässen Vorgehens unabhängig von den beim Authentifizieren und beim Datenaustausch verwendeten Protokollen ist und dass daher beliebige geeignete Protokolle verwendet werden können. Unter Umständen muss den Personen mit dem Benutzermedium 2 gar nicht bewusst sein, dass sich das Identifizierungssystem vom Stand der Technik (bspw. "Mifare Classic") durch zusätzliche Sicherheitsmerkmale unterscheidet.

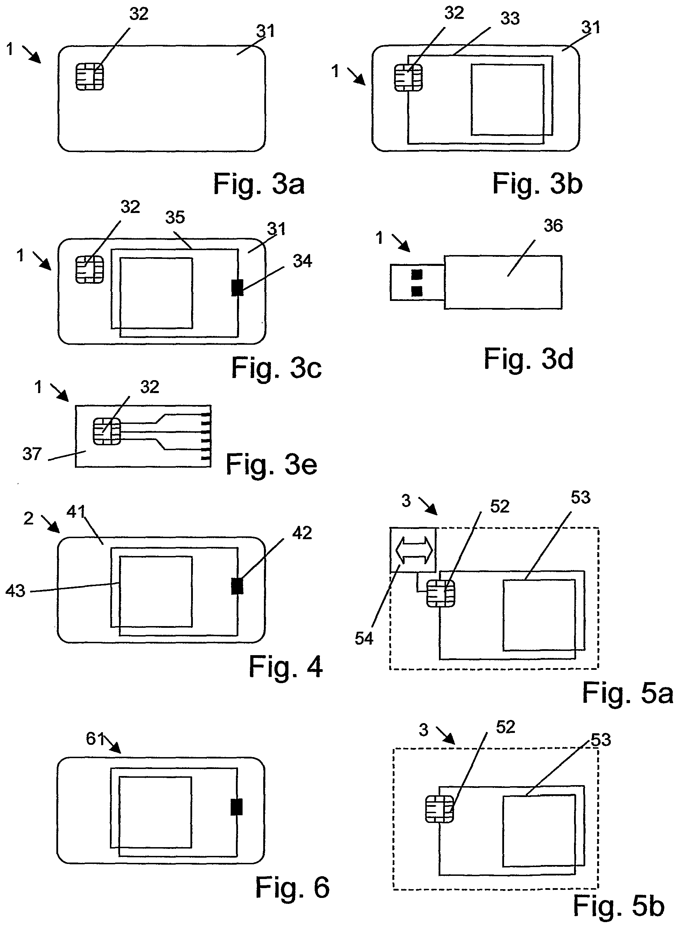

In den Figuren 3a bis 6 sind mögliche physische Ausgestaltungen von und Medien und Elektronikmodulen der Komponenten von erfindungsgemässen Identifizierungssystemen gezeichnet. Die Realisierung eines erfindungsgemässen Systems hängt jedoch nicht von den verwendeten Komponenten ab. Es können auch Medien/Module verwendet werden, die anders ausgestaltet sind als die gezeichneten Medien/Module; Figuren 3a bis 6 zeigen bloss einige mögliche Beispiele.

Das Schlüsselspendermedium 1 gemäss **Figur 3a** ist als "Smart Card" (Chipkarte) 31 mit einem Chip 32 ausgestaltet. Der Chip 32 ist ein Sicherheitschip der erwähnten Art, der sowohl Speichermittel als auch Prozessormittel in einem monolithischen Aufbau integriert. Der vorstehend beschriebene Datenaustausch erfolgt mit Hilfe eines beispielsweise konventionellen Chipkartenlesers. Ein solcher Chipkartenleser kann beispielsweise mit einem Computer verbunden sein, der den Datenaustausch vornimmt. Aufgrund des Vorgehens gemäss diversen Ausführungsformen der Erfindung wird sich zu keinen Zeitpunkt ein Quellenschlüssel 11 unverschlüsselt in einem Datenspeicher des Computers befinden. An den Computer kann gleichzeitig zum Chipkartenleser ein RFID-Schreib- und Lesegerät angeschlossen sein, wodurch der in Figur 1 gezeichnete Datenaustausch zwischen Schlüsselspendermedium 1 und Benutzermedium 2 direkt, online ausgeführt werden kann. Es ist jedoch auch denkbar, den Datenaustausch zeitversetzt vorzunehmen, durch Berechnen und Einlesen von beispielsweise mehreren abgeleiteten Schlüsseln 13 zusammen mit den Parametern 15 in den Computer und anschliessendes Initialisieren mehrerer Benutzermedien.

Die Chipkarte 31 gemäss **Figur 3b****,** die ebenfalls als Schlüsselspendermedium dienen kann, unterscheidet sich von derjenigen gemäss Figur 3a dadurch, dass sie in direkter Kommunikationsverbindung mit dem Chip 32 eine Radiofrequenzantenne 33 aufweist. Wenn der Chip 32 mit Strom versorgt wird, kann er via diese Antenne direkt mit einem RFID-Medium Daten austauschen, bspw. mit einem als RFID-Chip ausgestalteten Benutzermedium 2 oder mit einer Offline-Schreib- und/oder Leseeinheit, deren (bspw. einziges) Kommunikationsinterface ein RFID-Kommunikationsinterface ist.

Die Chipkarte gemäss **Figur 3c** weist nebst dem Chip 32 noch einen RFID-Chip 34 mit einer RFID-Antenne 35 auf. Dieser RFID-Chip 34 kann bspw. on-line (während die Chipkarte mit einem Computer in Kommunkationsverbindung steht) mit dem verschlüsselten Quellenschlüssel 11 beschrieben werden. Von diesem wird der verschlüsselte Quellenschlüssel 11 dann an eine Offline-Schreib- und/oder Leseeinheit, deren (bspw. einziges) Kommunikationsinterface ein RFID-Kommunikationsinterface ist, übertragen. Die Funktionalität der Chipkarte 31 gemäss Figur 3c ist also sehr ähnlich derjenigen gemäss Figur 3b.

**Figur 3d** zeigt das Schlüsselspendermedium 1 als USB-Dongle 36. Im Dongle ist der Sicherheitschip eingebaut, der physisch identisch mit dem Chip 32 der Chipkarten sein kann. Die Funktionalität des Schlüsselspendermediums gemäss Figur 3d ist identisch mit derjenigen des Schlüsselspendermediums gemäss Figur 3a, wobei jedoch kein Chipkartenleser benötigt wird. Anstelle einer USB-Schnittstelle kann ein solcher Dongle natürlich auch eine andere Schnittstelle aufweisen.

**Figur 3e** zeigt einen Sicherheitschip 32, der direkt auf eine Leiterplatte 37 aufgebracht und durch diese kontaktiert wird, eine solche Leiterplatte kann bspw. als Einschubkarte für einen Computer ausgestaltet sein. Auch das Aufbringen des Sicherheitschips 32 auf eine bereits bestehende Platine in einem Computer ist denkbar.

Ein Identifizierungssystem gemäss der Erfindung kann nur Schlüsselspendermedien 1 aufweisen, die alle gleich ausgestaltet sind, oder es sind beliebige Kombinationen denkbar. Bevorzugt ist jedoch, dass der Sicherheitschip auch bei unterschiedlichen Medien jeweils identischer Bauart und Funktionalität ist, dass sich also die unterschiedlichen Medien nur dadurch unterscheiden, wie der Datenaustausch mit dem Chip stattfindet.

**Figur 4** zeigt ein mögliches Benutzermedium 2. Dieses ist als Chipkarte 41mit eine RFID-Chip 42 mit RFID-Antenne 43 ausgestaltet. Anstatt auf einer Chipkarte können der RFID-Chip und die RFID-Antenne auch auf einem anderen Träger vorhanden sein, beispielsweise in ein Gerät mit noch anderen Funktionen integriert (Mobiltelefon, Uhr, etc.), auf einem Chipkarten-Cover etc.

**Figur 5a** zeigt schematisch ein Elektronikmodul einer Schreib- und/oder Leseeinrichtung 3. Nebst einem Chip 52, der als Sicherheitschip wie derjenige eines Schlüsselspendermediums (aber wie erwähnt mit einer etwas anderen Konfiguration) ausgestaltet ist, und einer RFID-Antenne 53 für den Datenaustausch mit einem Benutzermedium weist die Schreib- und/oder Leseeinrichtung 3 noch eine Schnittstelle 54 zum Datenaustausch mit einer Zentrale auf. Die Schreib- und/oder Leseeinrichtung gemäss Fig. 5a ist demnach ein Beispiel für eine Schreib- und/oder Leseeinrichtung, die für eine 'online' Schreib- und/oder Leseeinrichtung geeignet ist, die von der Zentrale aus initialisiert und programmiert werden kann. Die Zentrale wird zumindest für die Initialisierung und vorzugsweise auch für die Programmierung ein Schlüsselspendermedium aufweisen, das bspw. mit einem Computer der Zentrale in Kommunikationsverbindung steht. Für die Initialisierung wird bspw. der verschlüsselte Quellenschlüssel über Datenleitungen und via die Schnittstelle 54 an den Chip 52 gesendet.

Die Schreib- und/oder Leseeinrichtung 3 von **Figur 5b** unterscheidet sich von derjenigen der Fig. 5a dadurch, dass keine Schnittstelle vorhanden ist. Die Schreib- und/oder Leseeinrichtung ist geeignet für eine ,offline' Schreib- und/oder Leseeinrichtung und muss über RFID-Datentaustausch initialisiert und ggf. programmiert werden, bspw. mit Hilfe eines entsprechenden RFID-Programmiergeräts mit Chipkartenleser in Verbindung mit einem Schlüsselspendermedium gemäss Fig. 3a, oder unter Zuhilfenahme eines Schlüsselspendermediums wie in Fig. 3b oder 3c gezeichnet. Als weitere Alternative kann dafür ein Hilfsmedium verwendet werden, wie es nachstehend beschrieben wird.

**Figur 6** zeigt ein Hilfsmedium 61, das physisch wie ein Benutzermedium ausgestaltet sein kann und sich von einem solchen nicht notwendigerweise unterscheidet. Das Hilfsmedium 61 dient der Übertragung eines (verschlüsselten) Quellenschlüssels 11 an eine 'offline' Schreib- und/oder Leseeinrichtung und allenfalls - je nach Konfiguration des Identifzierungssystems und Sicherheitsanforderungen für die Programmierung der Schreib- und/oder Leseeinrichtungen - auch der Authenifizierung gegenüber einem solchen für eine Programmierung der Schreib- und/oder Leseeinrichtung. Ein solches Hilfsmedium 61 kann bspw. von einem Computer beschrieben werden, der in Kommunikationsverbindung mit einem Schlüsselspendermedium steht.

Für alle beschriebenen Medien gilt, dass anstelle oder zusätzlich zur RFID-Technologie andere Kommunkationskanäle verwendet werden können, bspw. Infrarot, Bluetooth oder andere kontaktlose Schnittstellen, kontaktbehaftete Signalübertragung, die kapazitiv-resistive Kopplung etc.

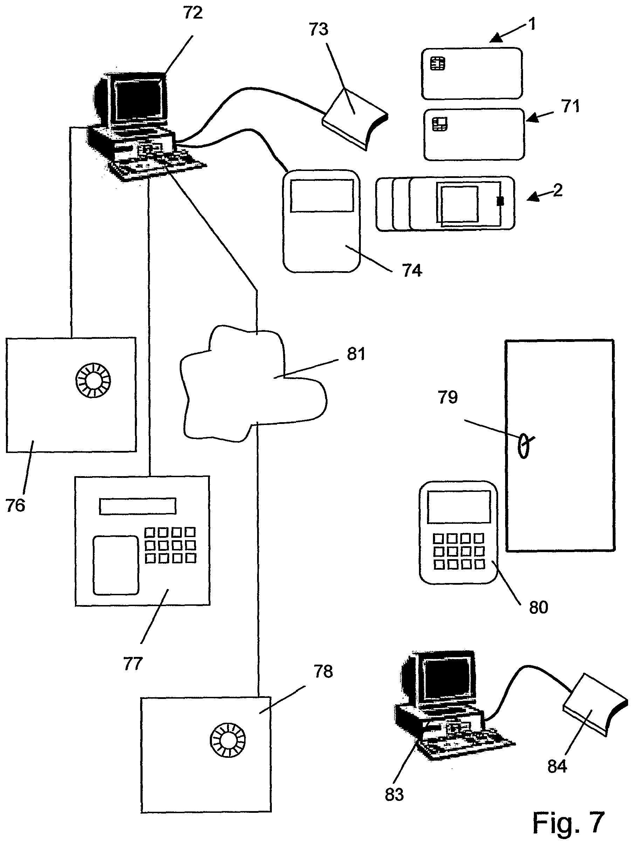

Anhand von **Figur 7** werden noch Elemente einer möglichen Ausgestaltung eines Identifizierungssystems gemäss der Erfindung gezeigt und einige Schritte zu dessen Betrieb erklärt. Eine beispielsweise mit mindestens einem geeigneten Computer 72 ausgestattete Zentrale des Betreibers des Identifzierungssystems erhält vom Hersteller mindestens ein Schlüsselspendermedium 1 und bspw. mindestens ein reduziertes Schlüsselspendermedium 71. Mit geeigneten Mitteln - hier mit einem mit dem Computer verbundenen Chipkartenleser 73 - kann in einem Schlüsselspendermedium der Initialisierungsprozess gestartet und ein Quellenschlüssel erzeugt werden. Das so mit dem Quellenschlüssel versehene Schlüsselspendermedium wird zum ersten Schlüsselspender. Mit Hilfe des Computers, der den von ersten Schlüsselspender zur Verfügung gestellten, mit dem vorinstallierten Sicherheitsschlüssel verschlüsselten Quellenschlüssel Zwischenspeichern und auf andere Schlüsselspendermedien übertragen kann, werden gegebenenfalls weitere Schlüsselspender erzeugt und wird beispielsweise auch ein reduziertes Schlüsselspendermedium mit dem Quellenschlüssel versehen. Das Vorhandensein des verschlüsselten Quellenschlüssels in einem Computerzwischenspeicher ist kein Sicherheitsrisiko, da dieser nur von den Schlüsselspendermedien und von den Schreib- und/oder Leseeinrichtungen entschlüsselt werden kann. Vorzugsweise werden die Schlüsselspendermedien ausserdem so eingerichtet, dass sie den verschlüsselten Quellenschlüssel und ggf. auch abgeleitete Schlüssel nur nach Eingabe eines PIN herausgeben; bei mehrfacher Eingabe eines falschen PINs wird ein Schlüsselspendermedium automatisch in den Grundzustand zurückversetzt, und der Quellenschlüssel gelöscht oder unzugänglich gemacht. Ergänzend oder alternativ dazu kann das auf dem Computer gespeicherte Datenpaket mit dem verschlüsselten Quellenschlüssel auch zusätzlich noch die - bspw. verschlüsselte - Unikatsnummer des zu beschreibenden Schlüsselspendermediums aufweisen, und nur bei Stimmigkeit kann das Schlüsselspendermedium beschrieben werden.

Im ersten Schlüsselspender bzw. einem der weiteren erzeugten Schlüsselspender oder reduzierten Schlüsselspender werden in der Folge abgeleitete Schlüssel für die Benutzermedien 2 generiert. Zu diesem Zweck werden entweder Unikatsnummer und/oder Applikationsnummer von den bereits damit versehenen Benutzermedien ausgelesen - dazu dient ein RFID-Schreib- und Lesegerät 74, welches ebenfalls mit dem Computer verbunden ist, oder die Applikationsnummer und/oder eventuell auch die Unikatsnummer wird vom Computer generiert und erst während des Initialisierungsprozesses auf die Benutzermedien geladen. Es ist auch möglich, auf einem Medium mehrere Applikationsnummern mit je einem abgeleiteten Schlüssel abzuspeichern, damit das Benutzermedium mehrere Funktionen wahrnehmen kann.

Der abgeleitete Schlüssel wird vom Computer aus dem Schlüsselspender ausgelesen und - ggf. zusammen mit Applikationsnummer und/oder eventuell der Unikatsnummer - auf den integrierten Schaltkreis (bspw. RFID-Chip) des entsprechenden Benutzermediums geladen.

Gleichzeitig, zuvor, oder danach werden die Schreib- und/oder Leseeinrichtungen initialisiert. Fig. 7 zeigt als Beispiele für Schreib- und/oder Leseeinrichtungen schematisch eine online über eine Datenleitung mit der Zentrale verbundene Sicherheitstüre 76, ein ebenfalls online mit der Zentrale verbundenes Datensammelterminal 77, eine über das Internet 81 kontaktierbare, sich in einem von der Zentrale verschiedenen Gebäude/Gebäudekomplex befindliche zweite Sicherheitstüre, eine nicht über Datenleitungen von der Zentrale aus programmierbare ("offline"-) Türe 79 und einen hier ebenfalls nicht mit Datenleitungen von der Zentrale aus kontaktierbaren, mit einem Computer 83 verbundenen Chipkarten-Leser 84.

Für die Initialisierung werden den Schreib- und/oder Leseeinrichtungen die Quellenschlüssel (verschlüsselt) über Datenleitungen (für 76-78) bzw. (für 79 und 84) über ein Hilfsmedium 61, einen RFID-fähigen Schlüsselspender, mit Hilfe eines RFID-fähigen Chipkartenlesers oder über eine geeignete andere Schnittstelle der Schreib- und/oder Leseeinrichtung übermittelt. Gleichzeitig oder daran anschliessend werden sie programmiert, indem bspw. entsprechende Berechtigungen (applikationsnummer- und/oder unikatsnummerabhängig, zeitabhängig etc.) vergeben werden. Die Programmierung kann online über die entsprechenden Datenleitungen (für 76-78) bzw. (für 79 und ggf. 84) über ein Programmiergerät 80 geschehen. Die Schreib- und/oder Leseeinrichtungen können auch zu einem späteren Zeitpunkt jederzeit umprogrammiert werden, wobei die Umprogrammierung die Anwesenheit eines Schlüsselspenders und/oder die Eingabe von Sicherheitsmerkmalen (Programmierungs-PIN etc.) voraussetzen kann; in ersterem Falle verlangt bspw. die Schreib- und/oder Leseeinrichtung den Quellenschlüssel bevor sie in einen Programmiermodus übergeht. Anstelle oder gleichzeitig mit einer Umprogrammierung kann selbstverständlich auch eine Abfrage von in der Schreib- und/oder Leseeinrichtung abgespeicherten Daten vorgenommen werden.

Der PC 83 mit Chipkartenleser 84 ist ein Beispiel für die Anwendung der Erfindung für die Kontrolle des Zugangs zu einem virtuellen Zutrittspunkt zu einem Computer oder Computernetzwerk. Dabei kann der Sicherheitschip im Chipkartenleser oder im Computer(-netzwerk) vorhanden sein und den Zugang zum Computer(netzwerk) als Ganzem oder zu bestimmten Applikationen autorisieren; selbstverständlich ist auch die Programmierbarkeit von der Zentrale über Datenleitungen wie bei vorstehend beschriebenen 'online'-Applikationen möglich.

Nach der Initialisierung werden die Schlüsselspender - die vorzugsweise alle registriert sind - an einem sicheren Ort aufbewahrt, bspw. in einem Safe, der nur einer eingeschränkten Personengruppe zugänglich ist. Falls ein Schlüsselspender abhanden kommt oder eine sonstige Sicherheitslücke vorhanden ist, können die Schreib- und/oder Leseeinrichtungen und die vorhandenen (oder neu gelieferte) Schlüsselspendermedien in den Grundzustand versetzt und neu initialisiert werden, ohne dass Komponenten ausgetauscht werden müssen. Das Zurücksetzen der Schreib- und/oder Leseeinrichtungen in den Grundzustand setzt vorzugsweise das Vorhandensein mindestens eines funktionierenden Schlüsselspenders voraus, d.h. solange noch ein funktionierender Schlüsselspender vorhanden ist, ist eine neu-Initialisierung jederzeit möglich.

Zusätzlich zu den in Figur 7 dargestellten Schreib- und/oder Leseeinrichtungen können auch andere Schreib- und/oder Leseeinrichtungen mit bspw. auch anderen Funktionen vorhanden sein, bspw. Geräte zum Abbuchen oder Aufladen der Benutzermedien als Wertkarten etc. Eine spezielle Kategorie von Schreib- und/oder Leseeinrichtungen sind Einrichtungen, die keinen dritten integrierten Schaltkreis aufweisen, daher den Quellenschlüssel nicht kennen und beispielsweise mit einem festen Andwendungsschlüssel versehen sind. Die Sicherheit bei Transaktionen mit solchen Schreib- und/oder Leseeinrichtungen ist weniger hoch, da eine Manipulation kaum kontrollierbar ist, wenn der Anwendungsschlüssel einmal kopiert wurde. Daher ist vorzugsweise vorgesehen, dass solche spezielle Schreib- und/oder Leseeinrichtungen nur in gesicherten Räumen verwendbar sind und/oder dass sie nur Daten lesen können und die Benutzermedien die das Beschreiben mit Daten von solchen Schreib- und/oder Leseeinrichtungen verweigern. Eine mögliche Anwendung von solchen speziellen Schreib- und/oder Leseeinrichtung ist die Zeiterfassung.

Gemäss einer möglichen Variante zum vorstehen beschriebenen Vorgehen kann der Quellenschlüssel bei der Herausgabe statt symmetrisch mit dem Sicherheitsschlüssel auch asymmetrisch verschlüsselt werden. Dann sollte mindestens der entschlüsselnde Schlüssel proprietär und nur den ersten und dritten integrierten Schaltkreisen bekannt sein. Vorzugsweise ist jedoch auch der verschlüsselnde Schlüssel proprietär und nur den entsprechenden Schaltkreisen bekannt, damit ein 'falscher' Schlüsselspender beim versuchten Umprogrammieren der Schreib- und/oder Leseeinrichtungen erkannt würde.

Als weitere Variante kann auch der Vorgang der Duplizierung eines Masters mit über eine Datenleitung erfolgen.

## Patentansprüche

1. Identifizierungssystem mit mindestens einem Benutzermedium (2), das dazu ausgerüstet ist, einen abgeleiteten Schlüssel (13) abzuspeichern und sich mit diesem gegenüber einer Schreib- und/oder Leseeinrichtung (3) zu authentisieren, aufweisend mindestens ein Schlüsselspendermedium (1,71), das einen monolithischen ersten integrierten Schaltkreis (32) mit Speichermitteln und Prozessormitteln beinhaltet, wobei der erste integrierte Schaltkreis dafür ausgerüstet ist, einen Quellenschlüssel (11) abzuspeichern und aus diesem den abgeleiteten Schlüssel (13) abzuleiten und für die Abspeicherung im Benutzermedium weiterzugeben, wobei das Schlüsselspendermedium befähigt ist, in einem Initialisierungsprozess den Quellenschlüssel (11) selbst zu generieren, und das Schlüsselspendermedium den Quellenschlüssel nur durch einen nicht auslesbaren Sicherheitsschlüssel entschlüsselbar weitergeben kann, wobei der Sicherheitsschlüssel (12) in jedem Schlüsselspendermedium (1, 71) vorhanden ist.

2. Identifizierungssystem nach Anspruch 1, aufweisend mindestens eine Schreib- und/oder Leseeinrichtung (3), wobei das Benutzermedium (2) und die Schreib- und/oder Leseeinrichtung (3) dazu befähigt sind, durch Datenaustausch einen Authentifizierungsprozess durchzuführen, und wobei die Schreib- und/oder Leseeinrichtung einen monolithischen dritten integrierten Schaltkreis aufweist, der befähigt ist, den von einem Schlüsselspendermedium verschlüsselt zur Verfügung gestellten Quellenschlüssel (11) abzuspeichern und aus diesem den abgeleiteten Schlüssel (13) abzuleiten.

3. Identifizierungssystem nach Anspruch 2, **dadurch gekennzeichnet, dass** der erste integrierte Schaltkreis und der dritte integrierte Schaltkreis bis auf eine Konfiguration miteinander identisch sind.

4. Identifizierungssystem nach Anspruch 2 oder 3, **dadurch gekennzeichnet, dass** die Schreib- und/oder Leseeinrichtung (3) bzw. mindestens eine der Schreib- und/oder Leseeinrichtungen über eine Datenleitung mit einer Zentrale verbunden ist.

5. Identifizierungssystem nach einem der Ansprüche 2 bis 4, **dadurch gekennzeichnet, dass** die Schreib- und/oder Leseeinrichtung (3) bzw. mindestens eine der Schreib- und/oder Leseeinrichtungen eine "offline"-Schreib- und/oder Leseeinrichtung (3) ist und durch ein Programmiergerät (80) programmierbar ist, wobei mindestens eine Initialisierung der Schreib- und/oder Leseeinrichtung (3) das Vorhandensein eines verschlüsselten, vom Schlüsselspendermedium zur Verfügung gestellten Quellenschlüssel (11) voraussetzt.

6. Identifizierungssystem nach einem der vorangehenden Ansprüche, wobei das Benutzermedium (2) weder direkt noch mit Hilfsmitteln befähigt ist, den Quellenschlüssel (11) aus dem Schlüsselspendermedium auszulesen und/oder wobei das Benutzermedium nicht befähigt ist, einen abgeleiteten Schlüssel zu berechnen.

7. Identifizierungssystem nach Anspruch 6, **dadurch gekennzeichnet, dass** der abgeleitete Schlüssel auf Basis des Quellenschlüssels und einer Unikatsnummer und/oder einer Applikationsnummer des Benutzermediums mit einem mathematisch vorzugsweise nicht umkehrbaren Algorithmus geschieht.

8. Identifizierungssystem nach Anspruch 6 oder 7, wobei das Schlüsselspendermedium (1,71) befähigt ist, über eine erste Schnittstelle mit einem anderen Medium Daten auszutauschen und das Benutzermedium (2) befähigt ist, über eine zweite Schnittstelle mit einem anderen Medium Daten auszutauschen, wobei die erste und die zweite Schnittstelle zueinander nicht kompatibel sind, wobei die zweite Schnittstelle vorzugsweise eine Schnittstelle für einen berührungslosen Datenaustausch ist, bspw. eine RFID-Schnittstelle.

9. Identifizierungssystem nach einem der vorangehenden Ansprüche, **dadurch gekennzeichnet, dass** das Benutzermedium (2) einen RFID-Chip (42) aufweist, der befähigt ist, den abgeleiteten Schlüssel (13) abzuspeichern.

10. Identifizierungssystem nach einem der vorangehenden Ansprüche **dadurch gekennzeichnet, dass** der erste integrierte Schaltkreis (32) ein kontaktbehaftet auslesbarer Chip ist.

11. Identifizierungssystem nach einem der vorangehenden Ansprüche **dadurch gekennzeichnet, dass** der erste integrierte Schaltkreis dafür ausgerüstet ist, ein von einem anderen Schlüsselspendermedium zur Verfügung gestellten verschlüsselten Quellenschlüssel (11) zu entschlüsseln und abzuspeichern, und den Quellenschlüssel verschlüsselt, mit dem Sicherheitsschlüssel (12) entschlüsselbar an ein anderes Schlüsselspendermedium (1, 71) weiterzugeben.

12. Identifizierungssystem nach Anspruch 11, **dadurch gekennzeichnet, dass** neben dem genannten Schlüsselspendermedium (1) mindestens ein reduziertes Schlüsselspendermedium (71) vorhanden ist, welches befähigt ist, aus dem Quellenschlüssel (11) den abgeleiteten Schlüssel (13) abzuleiten und für die Abspeicherung im Benutzermedium weiterzugeben, und welches nicht befähigt ist, den Quellenschlüssel so verschlüsselt zur Verfügung zu stellen, dass er von einem anderen Schlüsselspendermedium (1) oder reduzierten Schlüsselspendermedium (71) entschlüsselt und abgespeichert werden kann.

13. Identifizierungssystem nach einem der Ansprüche 11 oder 12, wobei für die Weitergabe eines Quellenschlüssels die gleichzeitige Weitergabe eines Codes voraussetzbar ist, welcher für das andere, zu beschreibende Schlüsselspeichermedium spezifisch ist.

14. Verfahren zum Einrichten eines Identifizierungssystem mit mindestens einem Benutzermedium (2), das dafür ausgerüstet ist, sich mit einem abgeleiteten Schlüssel gegenüber einer Schreib- und/oder Leseeinrichtung (3) zu authentisieren, und mit mindestens ein Schlüsselspendermedium (1,71), aufweisend die folgenden Verfahrensschritte:
(a) Abgabe mindestens eines Schlüsselspendermediums (1, 71) an einen Betreiber des Identifizierungssystems, wobei das Schlüsselspendermedium dafür ausgerüstet ist, einen Quellenschlüssel (11) zu generieren, abzuspeichern und aus diesem abgeleitete Schlüssel (13) abzuleiten,
(b) Abgabe einer Mehrzahl von Benutzermedien ohne Schlüssel oder mit identischen Schlüsseln an den Betreiber, wobei die Benutzermedien befähigt sind, den vom Schlüsselspendermediums (1, 71) zur Verfügung gestellten abgeleiteten Schlüssel zu empfangen und abzuspeichern,
wobei das mindestens eine Schlüsselspendermedium (1, 71) zum Zeitpunkt der Abgabe an den Betreiber einen nicht auslesbaren Sicherheitsschlüssel (12) aufweist und befähigt ist aus dem Quellenschlüssel (11) den abgeleiteten Schlüssel (13) abzuleiten und für die Abspeicherung im Benutzermedium weiterzugeben, und wobei das Schlüsselspendermedium den Quellenschlüssel (11) nur durch den nicht auslesbaren Sicherheitsschlüssel (12) entschlüsselbar weitergeben kann.

15. Verfahren nach Anspruch 14, **dadurch gekennzeichnet, dass** das Schlüsselspendermedium befähigt ist, einen von einem anderen Schlüsselspendermedium zur Verfügung gestellten verschlüsselten Quellenschlüssel (11) zu entschlüsseln und abzuspeichern.

## Claims

1. An identification system with at least one user medium (2), which is equipped for storing a derived key (13) and for authenticating with said key at a write and/or read device (3), including at least one key dispenser medium (1, 71), which contains a monolithic first integrated circuit (32) with memory means and processor means, wherein the first integrated circuit is equipped for storing a source key (11) and for deriving from the same the derived key (13) and for forwarding it for the storage in the user medium, wherein, in an initialization process, the key dispenser medium itself is enabled for generating the source key (11), and the key dispenser medium may only forward the source key in a decryptable manner by means of a non-readable security key, wherein the security key (12) is provided in each key dispenser medium (1, 71).

2. The identification system according to claim 1, including at least one write and/or read device (3), wherein the user medium (2) and the write and/or read device (3) are enabled to perform an authentication process by means of data exchange, and wherein the write and/or read device includes a monolithic third integrated circuit, which is enabled to store the source key (11) in an encrypted manner provided by the key dispenser medium and for deriving the derived key (13) from the source key.

3. The identification system according to claim 2, **characterized in that** the first integrated circuit and the third integrated circuit are identical with each other except for one configuration.

4. The identification system according to claim 2 or 3, **characterized in that** the write and/or read device (3), respectively at least one of the write and/or read devices are connected to a central station via a data line.

5. The identification system according to any of the claims 2 to 4, **characterized in that** the write and/or read device (3), respectively at least one of the write and/or read devices is an off-line write and/or read device (3) and is programmable by means of a programming apparatus (80), wherein at least one initialization of the write and/or read device (3) requires the presence of an encrypted source key (11) provided by the key dispenser medium.

6. The identification system according to any of the preceding claims, wherein the user medium (2) is neither enabled directly nor with auxiliary means to read the source key (11) from the key dispenser medium and/or wherein the user medium is not enabled to calculate a derived key.

7. The identification system according to claim 6, **characterized in that** the derived key is realized based on the source key and on a unique number and/or on an application number of the user medium with a mathematical algorithm, which preferably is non-reversible.

8. The identification system according to claim 6 or 7, wherein, via a first interface, the key dispenser medium (1, 71) is enabled to exchange data with another medium and, via a second interface, the user medium (2) is enabled to exchange data with another medium, wherein the first and the second interfaces are not compatible with each other, wherein, preferably, the second interface is an interface for a contactless data exchange, for example an RFID-interface.

9. The identification system according to any of the preceding claims, **characterized in that** the user medium (2) includes an RFID chip (42), which is enabled to store the derived key (13).

10. The identification system according to any of the preceding claims, **characterized in that** the first integrated circuit (32) is a readable contact chip.

11. The identification system according to any of the preceding claims, **characterized in that** the first integrated circuit is equipped to decrypt and to store an encrypted source key (11), which was provided by another key dispenser medium, and to forward the source key to another key dispenser medium (1, 71) in an encrypted manner and to be decryptable with the security key (12).

12. The identification system according to claim 11, **characterized in that**, in addition to the mentioned key dispenser medium (1), at least one reduced key dispenser medium (71) is provided, which is enabled to derive the derived key (13) from the source key (11) and to forward it for the storage in the user medium, and which is not enabled to provide the source key in an encrypted manner such that it may be decrypted and stored by another key dispenser medium (1) or by a reduced key dispenser medium (71).

13. The identification system according to any of the claims 11 or 12, wherein for forwarding a source key, simultaneous forwarding of a code is a prerequisite, which is specific for the other key storage medium to be written.

14. A method for setting up an identification system with at least one user medium (2), which is equipped for authentication with a derived key at a write and/or read device (3), and with at least one key dispenser medium (1, 71), including the following method steps:
(a) delivering at least one key dispenser medium (1, 71) to a provider of the identification system, wherein the key dispenser medium is equipped for generating, for storing a source key (11) and for deriving from the same derived keys (13),
(b) delivering a plurality of user media without key or with identical keys to the provider, wherein the user media are enabled to receive and to store the derived key provided by the key dispenser medium (1, 71),
wherein the at least one key dispenser medium (1, 71) at the time of delivery to the provider includes a non-readable security key (12) and is enabled to derive the derived key (13) from the source key (11) and to forward it for the storage in the user medium, and wherein the key dispenser medium can only forward the source key (11) in a decryptable manner by means of the non-readable security key (12).

15. The method according to claim 14, **characterized in that** the key dispenser medium is enabled to decrypt and to store an encrypted source key (11), which is provided by another key dispenser medium.

## Revendications

1. Système d'indentification avec au moins un support d'information d'utilisateur (2), lequel est équipé pour mémoriser une clé dérivée (13) et pour s'authentifier avec celle-ci auprès d'un dispositif d'écriture et/ou de lecture (3), comprenant au moins un support distributeur de clés (1, 71), lequel inclut un premier circuit intégré monolithique (32) avec des moyens de mémoire et des moyens processeur, dans lequel le premier circuit intégré est équipé pour mémoriser une clé source (11) et pour dériver de celle-ci la clé dérivée (13) et pour la transmettre pour la mémorisation dans le support d'information d'utilisateur, dans lequel le support distributeur de clés, dans un processus d'initialisation, est apte à générer lui-même la clé source (11), et le support distributeur de clés peut seulement transmettre la clé source de façon décryptable par une clé de sécurité non-lisible, dans lequel la clé de sécurité (12) est prévue dans chaque support distributeur de clés (1, 71).

2. Système d'indentification selon la revendication 1, comprenant au moins un dispositif d'écriture et/ou de lecture (3), dans lequel le support d'information d'utilisateur (2) et le dispositif d'écriture et/ou de lecture (3) sont aptes à performer un processus d'authentification par échange de données, et dans lequel le dispositif d'écriture et/ou de lecture comprend un troisième circuit intégré monolithique, lequel est apte à mémoriser la clé source (11) de façon encryptée mise à disposition par un support distributeur de clés et à dériver de celle-ci la clé dérivée (13).

3. Système d'indentification selon la revendication 2, **caractérisé en ce que** le premier circuit intégré et le troisième circuit intégré sont identiques l'un à l'autre à l'exception d'une configuration.

4. Système d'indentification selon la revendication 2 ou 3, **caractérisé en ce que** le dispositif d'écriture et/ou de lecture (3), respectivement au moins l'un desdits dispositifs d'écriture et/ou de lecture est connecté à une centrale via une ligne de données.

5. Système d'indentification selon l'une des revendications 2 à 4, **caractérisé en ce que** le dispositif d'écriture et/ou de lecture (3), respectivement au moins l'un desdits dispositifs d'écriture et/ou de lecture est un dispositif d'écriture et/ou de lecture (3) « hors ligne » et est programmable par un appareil de programmation (80), dans lequel au moins une initialisation du dispositif d'écriture et/ou de lecture (3) pose comme pré-condition la présence d'une clé source (11) encryptée mise à disposition par le support distributeur de clés.

6. Système d'indentification selon l'une des revendications précédentes, dans lequel le support d'information d'utilisateur (2) n'est apte ni directement ni avec des moyens auxiliaires à lire la clé source (11) à partir du support distributeur de clés et/ou dans lequel le support d'information d'utilisateur n'est pas apte à calculer une clé dérivée.

7. Système d'indentification selon la revendication 6, **caractérisé en ce que** la clé dérivée est réalisée sur la base de la clé source et d'un chiffre unique et/ou d'un chiffre d'application du support d'information d'utilisateur avec un algorithme mathématique, lequel de préférence n'est pas réversible.

8. Système d'indentification selon la revendication 6 ou 7, dans lequel le support distributeur de clés (1, 71), via une première interface, est apte à échanger des données avec un autre support d'information, et le support d'information d'utilisateur (2), via une deuxième interface, est apte à échanger des données avec un autre support d'information, dans lequel la première et la deuxième interface ne sont pas compatibles l'une avec l'autre, dans lequel de préférence la deuxième interface est une interface pour l'échange de données sans contact, par exemple une interface RFID.

9. Système d'indentification selon l'une des revendications précédentes, **caractérisé en ce que** le support d'information d'utilisateur (2) comprend une puce RFID (42) laquelle est apte à mémoriser la clé dérivée (13).

10. Système d'indentification selon l'une des revendications précédentes, **caractérisé en ce que** le premier circuit intégré (32) est une puce à contact lisible.

11. Système d'indentification selon l'une des revendications précédentes, **caractérisé en ce que** le premier circuit intégré est équipé pour décrypter et pour mémoriser une clé source (11) encryptée mise à disposition par un autre support distributeur de clés, et pour transmettre la clé source encryptée, décryptable avec la clé de sécurité (12), à un autre support distributeur de clés (1, 71).

12. Système d'indentification selon la revendication 11, **caractérisé en ce que**, en plus du support distributeur de clés (1) mentionné, au moins un support distributeur de clés (71) réduit est prévu, lequel est apte à dériver la clé dérivée (13) à partir de la clé source (11) et à la transmettre pour la mémorisation dans le support d'information d'utilisateur, et lequel n'est pas apte à mettre à disposition la clé source encryptée de telle façon qu'elle peut être décryptée et mémorisée par un autre support distributeur de clés (1) ou par un support distributeur de clés (71) réduit.

13. Système d'indentification selon l'une des revendications 11 ou 12, dans lequel pour la transmission d'une clé source la transmission simultanée d'un code est une pré-condition à poser, lequel code est spécial pour l'autre support de mémorisation de clés à écrire.

14. Méthode pour l'établissement d'un système d'identification avec au moins un support d'information d'utilisateur (2), lequel est équipé pour s'authentifier avec une clé dérivée auprès d'un dispositif d'écriture et/ou de lecture (3), et avec au moins un support distributeur de clés (1, 71), comprenant les étapes de méthode suivantes :
(a) fourniture d'au moins un support distributeur de clés (1, 71) à un opérateur du système d'identification, dans lequel le support distributeur de clés est équipé pour générer, pour mémoriser une clé source (11) et pour dériver de celle-ci des clés dérivées (13),
(b) fourniture à l'opérateur d'une pluralité de supports d'information d'utilisateur sans clé ou avec des clés identiques, dans lequel les supports d'information d'utilisateur sont aptes à recevoir et à mémoriser la clé dérivée et mise à disposition par le support distributeur de clés (1, 71),
dans lequel ledit au moins un support distributeur de clés (1, 71) au moment de la fourniture à l'opérateur comprend une clé de sécurité (12) non-lisible et est apte à dériver la clé dérivée (13) à partir de la clé source (11) et à la transmettre pour la mémorisation dans le support d'information d'utilisateur, et dans lequel le support distributeur de clés peut transmettre la clé source (11) de façon décryptable seulement par la clé de sécurité (12) non-lisible.

15. Méthode selon la revendication 14, **caractérisé en ce que** le support distributeur de clés est apte à décrypter et à mémoriser une clé source (11) encryptée mise à disposition par un autre support distributeur de clés.
